# EUROPEAN PATENT APPLICATION

(11) **EP 4 564 564 A1**
(43) Date of publication of application: **04.06.2025**
(21) Application number: 23846075.2
(22) Date of filing: 20.06.2023
(51) Int. Cl.: H01M 50/342, H01M 50/107, H01M 50/119, H01M 50/133

(54) **CYLINDRICAL BATTERY**

(30) Priority: 28.07.2022 JP 2022120481
(71) Applicant: Panasonic Energy Co., Ltd., Osaka 570-8511 (JP)
(72) Inventor: KISHIMOTO Minami, Kadoma-shi, Osaka 571-0057 (JP); MIHARA Satoru, Kadoma-shi, Osaka 571-0057 (JP); OKUTANI Oose, Kadoma-shi, Osaka 571-0057 (JP)
(74) Representative: Eisenführ Speiser
(86) International application number: PCT/JP2023/022692
(87) International publication number: WO 2024/024341

(57) **Abstract**

This cylindrical battery comprises an electrode body, an electrolyte, an exterior can having a bottomed tubular shape for accommodating the electrode body and the electrolyte, and a sealing body for sealing an opening of the exterior can. A bottom section (68) of the exterior can includes two linear stamped grooves (31, 32) that have an intersection point (61). At a corner portion set between the two linear stamped grooves (31, 32), an inclined surface (41) is formed such that the width of the bottom section (68) decreases the closer the same is to the intersection point (61).

## Description

### TECHNICAL FIELD

The present disclosure relates to a cylindrical battery.

### BACKGROUND ART

In recent years, there is a need for batteries with high energy density. In addition, importance of safety of the batteries is also increasing in response to an increase in energy density of the batteries. To improve the safety of the battery, PATENT LITERATURE 1 discloses a technique in which a bottom of a cylindrical secondary battery is subjected to press working with an engraving die to provide an engraved groove therein, so that the bottom is to be broken along the engraved groove in case of abnormality.

### CITATION LIST

### PATENT LITERATURE

PATENT LITERATURE 1: Japanese Unexamined Patent Application Publication No. Hei 06-333548

### SUMMARY

In a case where an engraved groove is provided by press working with an engraving die, there occurs a material escape from a portion where material thickness is reduced through engraving to another portion. In a case where the bottom of an exterior housing can has a plurality of linear engraved grooves having an intersection point, material escapes from the two engraved grooves concentrates in corner portions between the two engraved grooves, so that work hardening due to stress concentration may occur in the corner portions. In addition, the material escapes from engraved grooves interfere with each other at the corner portions, so that a thickness deviation, which is a bulged interfering portion, may occur. When such work hardening and thickness deviation occur, a safety vent does not properly rupture, leading to a large variation in working pressure of the safety vent. Accordingly, an object of the present disclosure is to provide a cylindrical battery in which work hardening and thickness deviation are less likely to occur in the corner portions between two linear engraved grooves, so that variation in working pressure of a safety vent in a bottom of an exterior housing can is small.

In order to solve the above-described problem, a cylindrical battery according to the present disclosure comprises an electrode assembly, an electrolyte, a bottomed cylindrical exterior housing can that houses the electrode assembly and the electrolyte, and a sealing assembly with which an opening of the exterior housing can is capped, wherein the bottom of the exterior housing can includes two linear engraved grooves having an intersection point, and an inclined surface is formed at a corner portion between the two linear engraved grooves so that a thickness of the bottom is reduced toward the intersection point.

A method of producing a cylindrical battery according to the present disclosure, the cylindrical battery comprising an electrode assembly, an electrolyte, a bottomed cylindrical exterior housing can that houses the electrode assembly and the electrolyte, and a sealing assembly with which an opening of the exterior housing can is capped, the method comprising pressing the bottom of the exterior housing can to form two linear engraved grooves having an intersection point and to form an inclined surface at a corner portion between the two linear grooves, the inclined surface being formed such that a thickness of the bottom is reduced toward the intersection point.

According to the cylindrical battery according to the present disclosure, work hardening and thickness deviation can be less likely to occur in corner portions between two linear engraved grooves, so that variation in working pressure of a safety vent in a bottom of an exterior housing can may be reduced.

### BRIEF DESCRIPTION OF DRAWING

FIG. 1 is a longitudinal sectional view of a cylindrical secondary battery which is an example of embodiments.
FIG. 2 is a bottom view of the above-described cylindrical secondary battery.
FIG. 3 is a partial enlarged bottom view of a region indicated by R in FIG. 2.
FIG. 4 is a partial enlarged perspective view of peripheries of an intersection point of linear grooves in FIG. 3.
FIG. 5 is a diagram illustrating an inclination angle of a first inclined surface.
FIG. 6 is a bottom view corresponding to FIG. 2 in a cylindrical secondary battery of a modified example.

### DESCRIPTION OF EMBODIMENTS

Hereinafter, an example of embodiments of a cylindrical battery according to the present disclosure will be described in detail with reference to the drawings. In the following description, specific shapes, materials, values, directions, and the like, which are examples for facilitating understanding of the present invention, may be appropriately modified with specifications of cylindrical batteries. In addition, when a plurality of embodiments and modified examples are included in the following description, use in appropriate combination of characteristic portions thereof are anticipated in advance.

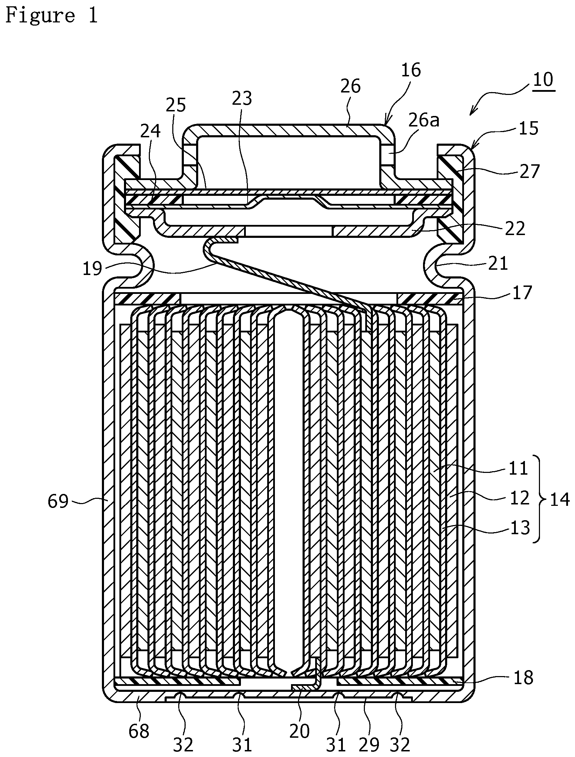

FIG. 1 is a longitudinal sectional view of a cylindrical secondary battery 10 which is an example of embodiments. The cylindrical secondary battery 10 comprises an electrode assembly 14, an electrolyte (not illustrated), a bottomed cylindrical exterior housing can 15 that houses the electrode assembly 14 and the electrolyte, and a sealing assembly 16 with which an opening of the exterior housing can 15 is capped. In the following description, the sealing assembly 16 side in an axial direction of the exterior housing can 15 will be described as an upper side, and a bottom 68 side in the axial direction of the exterior housing can 15 will be described as a lower side. In addition, a direction perpendicular to the axial direction of the exterior housing can 15 will be described as a radial direction, a center side in the radial direction of the exterior housing can 15 will be described as an inner side, and an outer side in the radial direction will be described as an outer side.

The electrode assembly 14 has a wound structure in which a positive electrode 11 and a negative electrode 12 are wound with a separator 13 interposed therebetween. The electrode assembly 14 is not limited to a wound type, and may be a stacked-type electrode assembly. The positive electrode 11 has, for example, a band-shaped positive electrode current collector and a positive electrode mixture layer formed on each surface of the positive electrode current collector. For the positive electrode current collector, a foil of a metal, such as aluminum, a film in which such a metal is disposed on a surface layer thereof, and the like are used, for example. The positive electrode mixture layer includes at least a positive electrode active material, and may include a conductive agent, a binder, and the like. Examples of the positive electrode active material may include a lithium-containing transition metal oxide containing a transition metal element such as Ni. The positive electrode 11 can be produced by applying a positive electrode mixture slurry prepared by dispersing the positive electrode active material or the like in a solvent on each surface of the positive electrode current collector, and then drying and rolling the positive electrode mixture layer.

The negative electrode 12 has, for example, a band-shaped negative electrode current collector and a negative electrode mixture layer formed on each surface of the negative electrode current collector. For the negative electrode current collector, a foil of a metal such as copper, a film in which such a metal is disposed on a surface layer thereof, or the like is used, for example. The negative electrode mixture layer includes at least a negative electrode active material, and may include a binder, and the like. Examples of the negative electrode active material may include carbon materials such as natural graphite and artificial graphite, metal compounds such as a silicon-based compound. The negative electrode 12 can be produced by applying a negative electrode mixture slurry prepared by dispersing the negative electrode active material or the like in a solvent on each surface of the negative electrode current collector, and then drying and rolling the negative electrode mixture layer.

A porous sheet having ion permeability and an insulation property may be used as the separator 13. Specific examples of the porous sheet include a fine porous thin film, a woven fabric, and a nonwoven fabric. The material of the separator 13 is preferably a polyolefin resin such as polyethylene or polypropylene.

An upper insulating plate 17 and a lower insulating plate 18 are disposed on upper and lower portions of the electrode assembly 14, respectively. A positive electrode lead 19 extends upward through a through hole of the upper insulating plate 17, and welded with the lower surface of a filter 22, which is a bottom plate of the sealing assembly 16. In the cylindrical secondary battery 10, a cap 26, which is a top plate of the sealing assembly 16 electrically connected to the filter 22, serves as a positive electrode terminal. Meanwhile, a negative electrode lead 20 extends through a through hole of the lower insulating plate 18 toward a bottom side of the exterior housing can 15, and welded with a bottom inner surface of the exterior housing can 15. In the cylindrical secondary battery 10, the exterior housing can 15 serves as a negative electrode terminal.

The exterior housing can 15 is a bottomed cylindrical metallic exterior housing can. The exterior housing can 15 has a bottom 68 and a side wall 69 provided to stand at a circumferential edge of the bottom 68. The bottom 68 of the exterior housing can 15 has a disk-shaped thin thickness portion 29 at a center portion on a radial inner side. The thin thickness portion 29 includes engraved grooves 31, 32 formed by pressing working with an engraving die. If the cylindrical secondary battery 10 abnormally generates heat, causing the internal pressure thereof to increase, the engraved grooves 31, 32 break, and high-temperature gas is discharged from the broken portion. A grooved portion 21 is formed in the side wall 69 of the exterior housing can 15. The grooved portion 21 supports the sealing assembly 16 from the lower side. The grooved portion 21 is preferably formed annularly along the circumferential direction of the exterior housing can 15.

An opening in an upper portion of the exterior housing can 15 is capped with the sealing assembly 16 via a gasket 27, and the inside sealability of the cylindrical secondary battery 10 is ensured. The sealing assembly 16 has a filter 22, a lower vent member 23, an insulating member 24, an upper vent member 25, and a cap 26 which are stacked in this order from the electrode assembly 14 side. Each member constituting the sealing assembly 16 has, for example, a disk shape or a ring shape, and each member except for the insulating member 24 is electrically connected each other. The lower vent member 23 and the upper vent member 25 are connected each other at respective central portions thereof, and the insulating member 24 is interposed between the circumferential edge portions of the vent members 23 and 25. If the internal pressure of the cylindrical secondary battery 10 increases with abnormal heat generation, for example, the lower vent member 23 breaks and the upper vent member 25 expands toward the cap 26 side to be separated from the lower vent member 23, resulting in cutting off of an electrical connection between both of the members. If the internal pressure further increases, the upper vent member 25 breaks, and gas is discharged through an opening 26a of the cap 26. Each of the bottom 68 of the exterior housing can 15 and the sealing assembly 16 functions as a safety vent (explosion-proof vent). Any one of the bottom 68 and the sealing assembly 16 may be opened first, and it can be appropriately designed.

In addition to the electrode assembly 14, an electrolyte is housed in the exterior housing can 15. For the electrolyte, for example, an electrolyte based on aqueous solution and non-aqueous electrolyte may be used, but non-aqueous electrolyte is preferably used. Examples of a non-aqueous solvent (organic solvent) of the non-aqueous electrolyte include carbonates, lactones, ethers, ketones, and esters. Two or more of these solvents may be mixed to be used. When two or more of the solvents are mixed to be used, a mixed solvent including a cyclic carbonate and a chain carbonate is preferably used. Ethylene carbonate (EC), propylene carbonate (PC), butylene carbonate (BC), or the like may be used as the cyclic carbonate. Dimethyl carbonate (DMC), ethyl methyl carbonate (EMC), diethyl carbonate (DEC), or the like may be used as the chain carbonate. For the esters, a carbonate ester such as methyl acetate (MA) or methyl propionate (MP) is preferably used. The non-aqueous solvent may contain a halogen-substituted product obtained by substituting at least some of hydrogen atoms in these solvents with a halogen atom such as fluorine. For the halogen-substituted product, for example, fluoroethylene carbonate (FEC), methyl fluoropropionate (FMP), and the like are preferably used.

For an electrolyte salt in the non-aqueous electrolyte, LiPF₆, LiBF₄, LiCF₃SO₃, lithium bis (fluorosulfonyl) imide, lithium bis (trifluoromethanesulfonyl) imide, and the like, and a mixture thereof may be used. An amount of the electrolyte salt dissolved in the non-aqueous solvent may be, for example, greater than or equal to 0.5 mol/L and less than or equal to 2.0 mol/L. **In** addition, vinylene carbonate (VC) or propane sultone-based additive may be added.

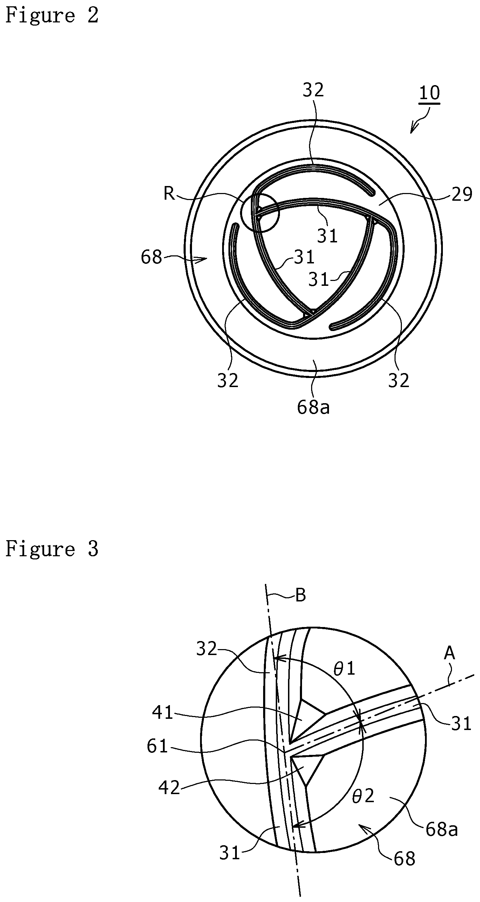

FIG. 2 is a bottom view of the cylindrical secondary battery 10. As illustrated in FIG. 2, the bottom 68 of the exterior housing can 15 has a plurality of first linear engraved grooves 31 that are combined to form a polygonal shape, and a plurality of second linear engraved grooves 32 that extend outward from each of vertices of the polygonal shape. The polygonal shape formed by the plurality of first engraved grooves 31 is, for example, a regular polygonal shape. The polygonal shape formed by the first engraved grooves 31 may be any shape recognized as a polygonal shape with the naked eye, and the first engraved grooves 31 are not limited to straight lines, and may be curvilinear.

In the example illustrated in FIG. 2, the polygonal shape is a triangle surrounded by the three same first engraved grooves 31 each protruding outward. In this way, in a case where the plurality of first engraved grooves defining the polygonal shape are curvilinear, each first engraved groove preferably protrudes outward. The number of engraved grooves is determined on a basis of a portion surrounded by intersection points or of a portion surrounded by an intersection point and an end portion. In the example illustrated in FIG. 2, the number of each of the first engraved grooves 31 and the second engraved grooves 32 is three. Note that, in the cylindrical battery of the present disclosure, it is sufficient that the bottom of the exterior housing can includes two linear engraved grooves having an intersection point, and the number of linear engraved grooves is not limited to a particular number. In addition, the bottom of the exterior housing can need not have a polygonal shape formed by the plurality of engraved grooves.

The depth of the engraved groove 31, 32 is, for example, greater than or equal to 0.1 mm and less than or equal to 0.5 mm, and the width of the engraved groove 31, 32 is, for example, greater than or equal to 0.1 mm and less than or equal to 1.0 mm. The sectional shape of the engraved groove 31, 32 is not limited to a particular shape, but is, for example, an isosceles trapezoid shape or a V shape. Note that the depth, width and sectional shape of the engraved groove 31, 32 may vary in an extending direction. In this case, each of the depth and width of the engraved groove 31, 32 is represented by an average value in the extending direction.

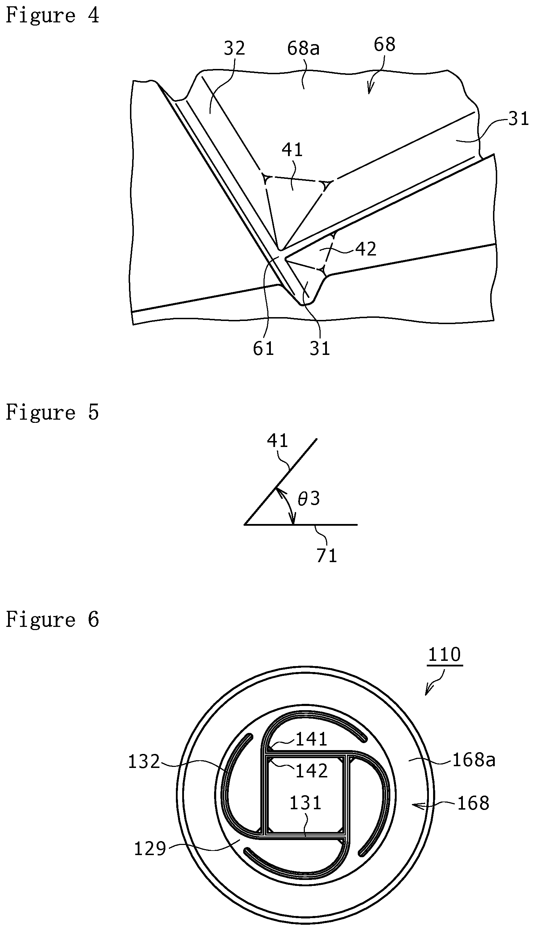

FIG. 3 is a partial enlarged bottom view of a region indicated by R in FIG. 2, and FIG. 4 is a partial enlarged perspective view of peripheries of an intersection point 61 of linear engraved grooves 31, 32 in FIG. 3. As illustrated in FIG. 3 and FIG. 4, two first engraved grooves 31 and the second engraved groove 32 have the intersection point 61 at which the first engraved groove 31 and the second engraved groove 32 intersect each other. A first inclined surface 41 formed so that the thickness of the bottom 68 is reduced toward the intersection point 61 is formed at a corner portion between the first engraved groove 31 and the second engraved groove 32. In addition, a second inclined surface 42 formed so that the thickness of the bottom 68 is reduced toward the intersection point 61 is formed at a corner portion between the two first engraved grooves 31.

In this specification, an intersection point between two linear engraved grooves can be determined as a point at which bottoms of the two linear engraved grooves intersect each other. In addition, an angle of the corner portion can be determined on the basis of the bottoms of the two linear engraved grooves in plan view when the bottom surface of the exterior housing can is viewed from the lower side in the axial direction. In a case where engraved grooves extending from an intersection point are curvilinear, the intersection point between the corner portions can be determined on the basis of the tangent lines of the engraved grooves at the intersection point therebetween. In a case where the bottom of the engraved groove has a predetermined width, an angle of the corner portion can be determined on the basis of a center position in the width direction of the bottom.

In FIG. 3, the tangent lines of the first engraved groove 31 and the second engraved groove 32 at the intersection point 61 therebetween are indicated by a straight line A and a straight line B, respectively. An angle θ1 of the corner portion between the first engraved groove 31 and the second engraved groove 32 is an acute angle that is smaller than 90°. Meanwhile, an angle θ2 of the corner portion between the two first engraved grooves 31 is an obtuse angle that is larger than 90°. In a case where a plurality of corner portions are adjacent to each other at the intersection point 61, it is sufficient that an inclined surface is formed at at least one corner portion. When the angle of the corner portion is an acute angle, work hardening and thickness deviation are likely to occur in the corner portion, and therefore, an inclined surface is preferably formed in the corner portion having an acute angle. The angle of the corner portion is preferably greater than or equal to 30° from the standpoint of production easiness.

FIG. 5 is a diagram illustrating an inclination angle θ3 of the first inclined surface 41. In FIG. 5, a flat surface 71 is a flat surface extending in the radial direction of the cylindrical secondary battery 10. The inclination angle θ3 of the first inclined surface 41 is an angle formed by the first inclined surface 41 with respect to the bottom 68 of the exterior housing can 15. In other words, as illustrated in FIG. 5, the inclination angle θ3 of the first inclined surface 41 is an inclination angle of the first inclined surface 41 with respect to the flat surface 71 extending in the radial direction, and is less than 90°. The inclined surfaces 41, 42 are formed by pressing a bottom surface 68a of the bottom 68 of the exterior housing can 15. For the pressing, an engraving die is used including a press surface having projections corresponding to all of the engraved grooves 31, 32 and inclined surfaces corresponding to all of the inclined surfaces 41, 42.

The angle of the inclination angle θ3 (see FIG. 5) of the inclined surface 41, 42 is preferably greater than or equal to 40° and less than or equal to 80°, and more preferably greater than or equal to 50° and less than or equal to 70°. When the inclination angle of the inclined surface is less than or equal to 80°, the material from the engraved grooves can be effectively escaped to a side away from the corner portion. This makes it possible to effectively prevent work hardening and thickness deviation from occurring in the peripheries of the corner portion, and to effectively reduce variation in working pressure of a safety vent. In addition, when the inclination angle of the inclined surface is greater than or equal to 40°, highly accurate press working can easily be achieved. The inclined surface need not be a flat surface within the entire range, that is, for example, a portion away from the intersection point in the inclined surface may be a curved surface.

As described above, the bottom surface 68a of the bottom 68 of the cylindrical secondary battery 10 has the inclined surfaces 41, 42 formed at the corner portions between the two linear engraved grooves 31, 32 (or 31, 31) so that the thickness of the bottom 68 is reduced toward the intersection point 61. Accordingly, the material from the two linear engraved grooves 31, 32 (or 31, 31) can be escaped to a side away from the corner portion, and work hardening and thickness deviation can be prevented from occurring in the corner portion without the material being escaped toward a side of the intersection point 61 as a start point of breakage. This makes it possible to reduce variation in working pressure of a safety vent.

### <EXAMPLES>

### [Production of Exterior Housing Can]

The engraved grooves and the inclined surfaces, which have been described in the above-described embodiment, were formed in a case made from a sheet material after that case was subjected to drawing. The inclination angle of the inclined surface was less than or equal to 60°.

### [Production of Positive Electrode]

As the positive electrode active material, LiNi_{0.8}Co_{0.15}Al_{0.05}O₂ was used. A positive electrode mixture slurry was prepared by mixing 100 parts by mass of the positive electrode active material, 1.7 parts by mass of polyvinylidene difluoride as a binder, and 2.5 parts by mass of acetylene black as the conductive agent in a dispersion medium. The positive electrode was obtained by applying the positive electrode mixture slurry on each surface of the positive electrode current collector made of an aluminum foil except for a connection portion of the positive electrode tab, drying the resulting coating film, and then rolling the coating film at a predetermined thickness. The positive electrode was cut into a predetermined dimension, and the positive electrode tab (current collector lead) made of Al was connected to an exposed portion of the current collector by ultrasound welding.

### [Production of Negative Electrode]

As the positive electrode active material, easily graphitizable carbon was used. A negative electrode mixture slurry was prepared by mixing 100 parts by mass of the negative electrode active material, 0.6 parts by mass of polyvinylidene difluoride as a binder, and 1 part by mass of carboxymethyl cellulose as the thickener in water. The negative electrode was obtained by applying the negative electrode mixture slurry on each surface of the negative electrode current collector made of a copper foil except for a connection portion of the negative electrode tab, drying the resulting coating film, and then rolling the coating film at a predetermined thickness. The negative electrode was cut into a predetermined dimension, and the negative electrode tab (current collector lead) made of an Ni-Cu-Ni clad material was connected to an exposed portion of the current collector by ultrasound welding.

### [Preparation of Non-Aqueous Electrolytic Solution]

Lithium hexafluorophosphate (LiPF₆) was dissolved in a solvent mixture of ethylene carbonate (EC), diethyl carbonate (DEC) and ethyl methyl carbonate (EMC) to obtain a concentration of 1.0 mol/L as an electrolyte salt, to prepare a non-aqueous electrolytic solution.

### [Assembly of Cylindrical Battery]

The positive electrode and the negative electrode were spirally wound with a microporous membrane made of a polyolefin resin as a separator, to produce an electrode assembly. The electrode assembly was inserted into the exterior housing can via a disk-shaped bottom insulating plate, and the negative electrode tab connected to the negative electrode was connected by being welded to the bottom of the exterior housing can. Then, the positive electrode tab connected to the positive electrode and a sealing plate were connected by welding, and the opening of the exterior housing can was capped with the sealing plate.

### <Comparative Example>

A cylindrical battery was produced in the same manner as the cylindrical battery in Example except that the inclined surfaces are not formed.

### [Measurement of Working Pressure]

A working pressure of the safety vent of the bottom of the exterior housing can was measured for each of the cylindrical batteries of a plurality of Examples and the cylindrical batteries of a plurality of Comparative Examples. Specifically, in each cylindrical battery, a through hole was provided in the sealing plate, nitrogen gas was injected into the exterior housing can via the through hole, the pressure inside the battery increased until the safety vent formed by the engraved grooves in the bottom of the exterior housing can operated, and the working pressure of the safety vent was measured. Through this measurement, it was confirmed that the variation in working pressure of the safety vent in the cylindrical battery of Example was smaller than the working pressure of the safety vent in the cylindrical battery of Comparative Example.

### <Modified Example>

The present disclosure is not limited to the above-described embodiments and modified examples thereof, and various improvements and changes are possible within the matters described in the claims of the present application and the scope of equivalence of claims. For example, in the above-described embodiment, a case has been described where the angle θ2 of the corner portion which is larger than 90° is present. However, as described next, all of the angles of the corner portions at which the inclined surfaces are formed may be less than or equal to 90°.

FIG. 6 is a bottom view corresponding to FIG. 2 in a cylindrical secondary battery 110 of a modified example. As illustrated in FIG. 6, in the cylindrical secondary battery 110, the bottom 168 of the exterior housing can has four first straight linear engraved grooves 131 that are combined to form a square, and four second linear engraved grooves 132 that extend outward from each of a plurality of vertices of the square. The engraved grooves 131, 132 are produced by pressing the bottom surface 168a of the bottom 168 with the engraving die, and are produced in the thin thickness portion 129 provided at a radial center portion of the bottom 168. In addition, the first inclined surface 141 is provided at the corner portion between the first engraved groove 131 and the second engraved groove 132, and the second inclined surface 142 is provided at the corner portion (corner portion of the internal angle of the square) between the two first engraved grooves 131 adjacent to each other.

In the cylindrical secondary battery 110, each of the angle of the corner portion at which the first inclined surface 141 is provided and the angle of the corner portion at which the second inclined surface 142 is 90°. In this way, when each of the angles of the corner portions at which the inclined surfaces are formed is 90°, the inclined surface is preferably provided at each corner portion. This makes it possible to effectively prevent work hardening and thickness deviation from occurring in portions where the materials are easily displaced from the engraved grooves, and to effectively reduce variation in working pressure at the time of breakage.

Note that the bottom of the exterior housing can need not have a thin thickness portion. In the above-described embodiment, the inclined surfaces 41, 42 are formed in the same one flat surface. However, the inclined surface is a surface provided at a corner portion between two linear engraved grooves having an intersection point, and therefore, may have any shape as long as the surface can be formed so that the thickness of the bottom of the exterior housing can is reduced toward the intersection point. For example, the inclined surface may include two or more flat surface portions different in inclination angle, include one or more curved surface portions, or include one or more flat surface portions and one or more curved surface portions.

### REFERENCE SIGNS LIST

10, 110 Cylindrical secondary battery, 11 Positive electrode, 12 Negative electrode, 13 Separator, 14 Electrode assembly, 15 Exterior housing can, 16 Sealing assembly, 17 Upper insulating plate, 18 Lower insulating plate, 19 Positive electrode lead, 20 Negative electrode lead, 21 Grooved portion, 22 Filter, 23 Lower vent member, 24 Insulating member, 25 Upper vent member, 26 Cap, 26a Opening, 27 Gasket, 29, 129 Thin thickness portion, 31, 131 First engraved groove, 32, 132 Second engraved groove, 41, 141 First inclined surface, 42, 142 Second inclined surface, 61 Intersection point, 68, 168 Bottom, 68a, 168a Bottom surface, 69 Side wall, 71 Flat surface extending in radial direction

## Claims

1. A cylindrical battery, comprising:
an electrode assembly;
an electrolyte;
a bottomed cylindrical exterior housing can that houses the electrode assembly and the electrolyte; and
a sealing assembly with which an opening of the exterior housing can is capped, wherein
the bottom of the exterior housing can includes two linear engraved grooves having an intersection point, and
an inclined surface is formed at a corner portion between the two linear engraved grooves so that a thickness of the bottom is reduced toward the intersection point.

2. The cylindrical battery according to claim 1, wherein an angle of the corner portion is less than or equal to 90°.

3. The cylindrical battery according to claim 1 or 2, wherein
an inclination angle of the inclined surface is greater than or equal to 40° and less than or equal to 80° with respect to the bottom.

4. A method of producing a cylindrical battery comprising:
an electrode assembly;
an electrolyte;
a bottomed cylindrical exterior housing can that houses the electrode assembly and the electrolyte; and
a sealing assembly with which an opening of the exterior housing can is capped, the method comprising
pressing the bottom of the exterior housing can to form two linear engraved grooves having an intersection point and to form an inclined surface at a corner portion between the two linear grooves, the inclined surface being formed such that a thickness of the bottom is reduced toward the intersection point.
